(19) Europäisches Patentamt
European Patent Office
Office européen des brevets

(11) **EP 2 095 028 B1**

(12) **EUROPÄISCHE PATENTSCHRIFT**

(45) Veröffentlichungstag und Bekanntmachung des Hinweises auf die Patenterteilung:
**09.02.2011 Patentblatt 2011/06**

(21) Anmeldenummer: **07847035.8**

(22) Anmeldetag: **07.12.2007**

(51) Int Cl.:
*F24D 3/12* (2006.01)          *F24D 19/10* (2006.01)
*F24F 5/00* (2006.01)

(86) Internationale Anmeldenummer:
**PCT/EP2007/010689**

(87) Internationale Veröffentlichungsnummer:
**WO 2008/080508 (10.07.2008 Gazette 2008/28)**

(54) **TEMPERIERREGELSYSTEM SOWIE VERFAHREN ZUM KÜHL- UND HEIZBETRIEB EINES DERARTIGEN TEMPERIERREGELSYSTEMS**

TEMPERATURE REGULATION SYSTEM, AND METHOD FOR COOLING-MODE AND HEATING-MODE OPERATION OF SUCH A TEMPERATURE REGULATION SYSTEM

SYSTÈME DE RÉGULATION THERMOSTATIQUE ET PROCÉDÉ POUR LE FONCTIONNEMENT DES MODES DE CHAUFFAGE ET DE REFROIDISSEMENT D'UN TEL SYSTÈME DE RÉGULATION THERMOSTATIQUE

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **21.12.2006 DE 102006061801**

(43) Veröffentlichungstag der Anmeldung:
**02.09.2009 Patentblatt 2009/36**

(73) Patentinhaber: **Rehau AG + Co**
**95111 Rehau (DE)**

(72) Erfinder: **POMMER, Willi**
**90427 Nürnberg (DE)**

(56) Entgegenhaltungen:
EP-A- 1 591 728          DE-A1- 4 130 748
DE-C1- 10 060 797      DE-C1- 19 916 457
DE-U1- 20 004 881      IT-B- 1 247 632

**Beschreibung**

Die Erfindung betrifft ein Temperierregelsystem zur Regelung der Innentemperatur mindestens eines Raumes eines Gebäudes. Ferner betrifft die Erfindung ein Verfahren zum Kühl-und Heizbetrieb eines derartigen Temperierregelsystems.

Temperierregetsysteme der eingangs genannten Art sowie Betriebsverfahren hierfür sind bekannt aus der DE 200 04 881 U1 DE 100 60 797 C1, der DE 199 16 457 C1 und aus der IT 1 247 632. Derartige Temperierregelsysteme sind entweder im Aufbau recht aufwendig oder aber in ihrer Leistungsfähigkeit begrenzt. So gibt es aufwendige Temperierregelsysteme, die die Vorlauftemperaturen für den Raumboden einerseits und für die Raumdecke andererseits unabhängig voneinander geregelt vorgeben. Dies erfordert getrennte Mischeinrichtungen für den Raumboden und die Raumdecke sowie getrennte Pumpensysteme. Andere Temperierregelsysteme, die mit einer Mischeinrichtung und einer Pumpe auskommen, können entweder den Raumboden oder aber die Raumdecke temperieren, nicht aber beide Raumabschnitte gleichzeitig.

Es ist daher eine Aufgabe der vorliegenden Erfindung, ein Temperierregelsystem sowie ein Betriebsverfahren hierfür derart weiterzubilden, dass zumindest sowohl der Raumboden als auch die Raumdecke bei der Raumtemperierung bei einem im Vergleich zum Stand der Technik einfacheren Aufbau des Temperierregelsystems zum Einsatz kommen können.

Diese Aufgabe ist, was das Temperierregelsystem angeht, erfindungsgemäß gelöst durch ein Temperierregelsystem mit den im Anspruch 1 angegebenen Merkmalen.

Erfindungsgemäß wurde erkannt, dass es durchaus möglich ist, die einander zunächst unterschiedlichen Anforderungen der Aufgabenstellung zu erfüllen. Beim erfindungsgemäßen Temperierregelsystem werden alle Temperierrohrleitungen mit einer einheitlichen Vorlauftemperatur beschickt. Der unterschiedliche Kühl- bzw. Heizbedarf der die Temperierrohrleitungen aufweisenden Raumkomponenten, also insbesondere des Raumbodens und der Raumdecke, wird über den Raumtemperaturfühler erfasst.

Der jeweilige Heiz- bzw. Kühlbedarf wird über die Mengenströme durch die Temperierrohrleitungen mit Hilfe der Dosierventile eingestellt. Der oder die Grenztemperaturfühler sorgen dabei dafür, dass im Betrieb des Temperierregelsystems hinsichtlich des Kühlens eine technisch bedingte oder aufgrund von Behaglichkeitskriterien vorgegebene Minimaltemperatur nicht unterschritten und beim Heizen eine technisch bedingte oder durch Behaglichkeitskriterien vorgegebene Maximaltemperatur im hierfür anfälligsten, extrem temperierten Grenztemperaturraumabschnitt nicht überschritten wird. Dieser Raumabschnitt wird nachfolgend auch als kritischer Raumabschnitt bezeichnet. Beim Kühlen ist der extrem gekühlte Grenztemperaturraumabschnitt in der Regel derjenige, der dem kühlsten Abschnitt einer der Temperierrohrleitungen benachbart ist. Dort kann als technisches Minimaltemperaturkriterium zum Beispiel eine Kondensationsgefahr vorliegen, der durch entsprechende Anpassung der Temperatur des Kühlmediums bzw. Kühlfluids begegnet werden muss. Entsprechendes gilt für den extrem geheizten Grenztemperaturraumabschnitt im Heizbetrieb. Anstelle eines Raumes kann mit dem erfindungsgemäßen Temperierregelsystem auch nur ein Raumabschnitt temperiert werden. Auch mehrere Räume können zu einer Zone oder zu einem Bereich zusammengefasst werden, in dem die Temperatur geregelt werden soll. Wenn nachfolgend von einem Raum oder von mehreren Räumen gesprochen wird, sind gleichbedeutend derartige Raumabschnitte, Bereiche oder Zonen gemeint.

Eine zusätzliche Raumwandtemperierung nach Anspruch 2 lässt sich mit geringem Aufwand in das Temperierregelsystem integrieren, wobei keine zusätzliche Mischeinrichtung und keine zusätzliche Förderpumpe erforderlich sind.

Mit Hilfe eines Raumentfeuchters nach Anspruch 3 kann im Kühlbetrieb der Gefahr eines Erreichens der Minimaltemperatur im Grenztemperaturraumabschnitt durch Absenken der Luftfeuchtigkeit im Raum begegnet werden. Hierdurch wird die Kondensationsminimaltemperatur abgesenkt, so dass es oftmals nicht notwendig wird, die Kühlleistung zu senken.

Vorlauftemperaturfühler nach Anspruch 4 sowie vorteilhaft zusätzlich vorgesehene Rücklauftemperaturfühler ermöglichen eine Feinabstimmung der Temperierregelung, da die von den verschiedenen Raumkomponenten abgegebene Kühl- bzw. Heizleistung ermittelt werden kann.

Eine Aufteilung des Temperierregelsystems in Module nach Anspruch 5 ermöglicht es, bestimmte Datenerfassungen und -berechnungen ausschließlich mit dem Mastermodul durchzuführen, was den Hardwareaufwand für die Slavemodule reduziert. Es kann auch nur ein einziges Slavemodul neben dem Mastermodul vorgesehen sein. Die Aufteilung in Module dient grundsätzlich der Anpassung an unterschiedlich umfangreiche Temperierregelsysteme. Bei einfacheren Systemen kann ausschließlich das Mastermodul und kein Slavemodul vorhanden sein. Die Slavemodule können dezentral angeordnet sein und der Vorlauftemperaturregelung und/oder der Raumtemperaturregelung in weiteren Gebäuden oder Räumen dienen. Hierzu können die Slavemodule Mess- und Regelaufnahmen in den ihnen zugeordneten Räumen übernehmen und entsprechende Informationen mit dem Mastermodul austauschen.

Was den Kühlbetrieb des Temperierregelsystems angeht, ist die Aufgabe gelöst durch ein Verfahren mit den im Anspruch 6 angegebenen Merkmalen.

Die Vorteile eines Kühlbetriebsverfahrens für das erfindungsgemäße Temperierregelsystem nach Anspruch 6 entsprechen denen, die vorstehend unter Bezugnahme auf die vorhergehenden Ansprüche schon diskutiert wurden. Die Vorgabe einer oberhalb der Minimaltemperatur liegenden Eingriffstemperatur stellt beim Kühlbetrieb sicher, dass vor dem Erreichen der Minimaltemperatur eine ausreichende Beeinflussung des Systems stattfinden kann, so dass vermieden werden kann, dass insbesondere der Grenztemperaturraumabschnitt die Minimaltemperatur unterschreitet.

Das Anheben der Sollvorlauftemperatur im Kühlbetrieb nach Anspruch 7 ist insbesondere dann von Vorteil, wenn dieses Anheben durch Senken der Kühlleistung der Kaltfluidquelle geschehen kann, da dies den Gesamtenergiebedarf des Systems senkt. Unabhängig hiervon führt das Anheben der Sollvorlauftemperatur dazu, dass ein Unterschreiten der Minimaltemperatur sicher vermieden wird.

Ein proportionales Anheben der Sollvorlauftemperatur nach Anspruch 8 lässt sich einfach in einem Sollwertvorgabealgorithmus umsetzen.

Varianten für ein zeitweiliges Schließen eines Dosierventils zur Beeinflussung der Temperierung nach den Ansprüchen 9 bis 13 haben sich für den Betrieb des Regelsystems als besonders geeignet herausgestellt.

Bei den Verfahren nach den Ansprüchen 9 bis 12 kann ein baulich einfaches Dosierventil eingesetzt werden, welches entweder voll geöffnet oder voll geschlossen ist. Beim Verfahren nach Anspruch 12 kann die Summe der durch die Öffnungstakte resultierenden Öffnungszeiten einem Vorgabewert innerhalb des Betätigungszyklus entsprechen. Beim Verfahren nach Anspruch 13 ist eine feine Temperierungsbeeinflussung möglich, wobei ggf. auch störende Schaltgeräusche vermieden werden können. Beim Verfahren nach Anspruch 13 werden zudem Heiz- bzw. Kühlspitzen vermieden, da das Temperierfluid den zu temperierenden Raumflächen gleichmäßig über die Zeit zugeführt wird.

Ein zusätzliches Entfeuchten nach Anspruch 14 ist eine elegante Möglichkeit zur Absenkung der Kondensationsminimaltemperatur, sofern diese droht, die mögliche Kühlleistung durch das Temperierregelsystem zu begrenzen.

Was den Heizbetrieb des Temperierregelsystems angeht, ist die Aufgabe gelöst durch ein Verfahren mit den im Anspruch 15 angegebenen Merkmalen.

Die Vorteile des Heizbetriebsverfahrens nach Anspruch 15 entsprechen denen, die vorstehend in Bezug auf das Temperierregelsystem sowie in Bezug auf das Kühlbetriebsverfahren schon diskutiert wurden. Die Maximaltemperatur kann durch Technik- oder auch durch Behaglichkeitskriterien bedingt sein.

Ein Ausführungsbeispiel der Erfindung wird nachfolgend anhand der Zeichnung näher erläutert. In dieser zeigen:

Fig. 1    schematisch ein Temperierregelsystem zur Regelung der Innentemperatur min- destens eines Raumes eines Gebäudes, wobei die hierzu gehörenden Regel- module und deren Signalverbindungen mit den weiteren Komponenten des Re- gelsystems nicht dargestellt sind;

Fig. 2    schematisch die Regelmodule des Temperierregelsystems nach Fig. 1 zusam- men mit deren Datenverbindungen zu Komponenten des Regelsystems;

Fig. 3    ein Diagramm, welches ein Ansteuersignal für ein Dosierventil des Regelsys- tems in einer Vorlaufleitung in einer Raumdecke des Raums zeigt;

Fig. 4    mit der gleichen Zeitskala ein Diagramm, welches ein Ansteuersignal für ein Dosierventil des Regelsystems in einer Vorlaufleitung eines Raumbodens zeigt;

Fig. 5    in einer zur Fig. 4 ähnlichen Darstellung eine Variante der Ansteuerung des Raumbodendosierventils; und

Fig. 6    in einer weiteren zur Fig. 4 ähnlichen Darstellung eine weitere Variante einer Ansteuerung einer weiteren Ausführung des Raumbodendosierventils.

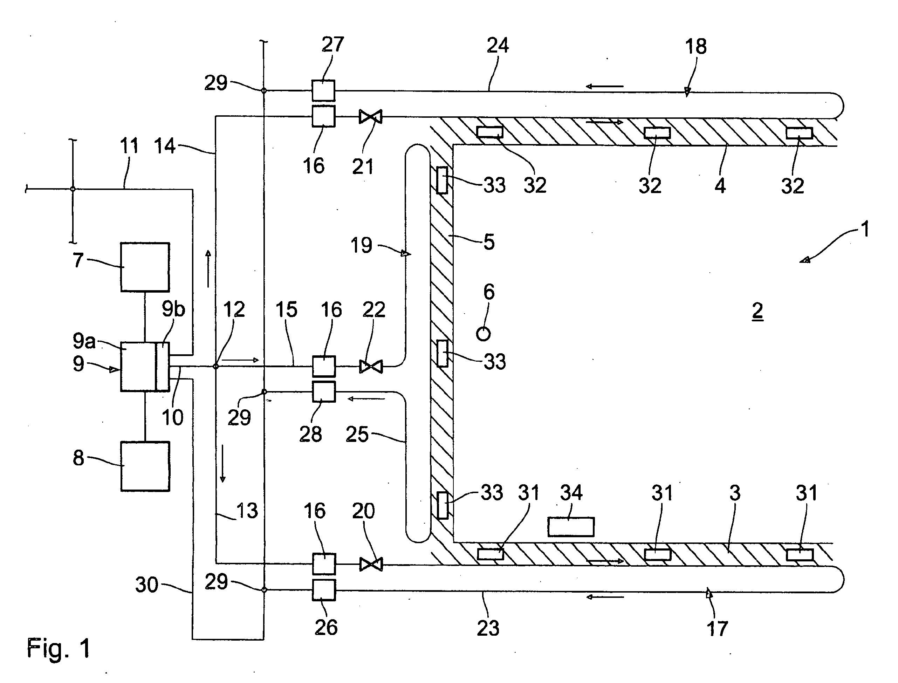

Abgesehen von Regelmodulen und deren Signalanbindung zeigt Fig. 1 ein Temperierregelsystem 1 zur Regelung der Innentemperatur mindestens eines Raumes 2 eines Gebäudes. Schematisch zeigt die Fig. 1 einen Raumboden 3, eine Raumdecke 4 und eine Raumwand 5. Im Raum 2 ist ein Multifunktionssensor 6 angeordnet. Dieser hat zum einen die Funktion eines Raumtemperaturfühlers zur Erfassung einer Ist-Raumtemperatur im Raum 2. Zum anderen hat der Multifunktionssensor 6 die Funktion eines Luftfeuchtigkeitsfühlers zur Erfassung einer Ist-Luftfeuchtigkeit im Raum 2. Der Sensor 6 kann in bestimmten Räumen auch nur mit einem Raumtemperaturfühler ausgestattet sein. In diesem Fall kann auf einen Luftfeuchtigkeitsfühler verzichtet werden.

Die Regelung der Raumtemperatur im Raum 2 erfolgt durch ein kombiniertes Temperieren des Raumbodens 3, der Raumdecke 4 und der Raumwände am Beispiel der Raumwand 5. Einfachere Ausführungen des Temperierregelsystems 1 temperieren nach Bedarf ausschließlich den Raumboden 3 und die Raumdecke 4, nicht aber die Raumwände 5.

Temperiert wird der Raum 2 mit Hilfe eines Temperierfluids, zum Beispiel mit Hilfe von Wasser. Hierzu sind als Heizfluidquelle eine Warmwasserquelle 7 und als Kaltfluidquelle eine Kaltwasserquelle 8 über eine Mischeinrichtung 9 miteinander verbunden. Die Mischeinrichtung 9 ist in noch zu beschreibender Weise unterteilt und stellt das Temperierfluid mit einer vorgegebenen Vorlauftemperatur $T_{soll}$ in Sammelvorlaufleitungen 10, 11 zur Verfügung. Die Sammelvorlaufleitung 10 ist dabei dem Raum 2 zugeordnet. Die Sammelvorlaufleitung 11 sowie weitere, nicht dargestellte Sammelvorlaufleitungen sind weiteren Räumen des Gebäudes zugeordnet. Die Führung des Temperierfluids in diesen weiteren Räumen entspricht derjenigen im Raum 2 und wird daher nicht gesondert beschrieben.

Die Mischeinrichtung 9 ist unterteilt in eine Umschalteinheit 9a und in eine eigentliche Mischeinheit 9b. Die Umschalteinheit 9a gibt im Kühlbetrieb die Verbindung mit der Kaltwasserquelle 8 und im Heizbetrieb die Verbindung mit der Warmwasserquelle 7 frei. Die Mischeinheit 9b mischt das jeweils freigegebene Temperierfluid mit rücklaufendem Temperierfluid, so dass das Temperierfluid in den Sammelvorlaufleitungen 10, 11 die vorgegebene Vorlauftemperatur $T_{soll}$ hat.

Ausgehend von einem Verteilerpunkt 12 verzweigt sich die Sammel-vorlaufleitung 10 in eine Raumbodenvorlaufleitung 13, eine Raumdecken-vorlaufleitung 14 und in eine Raumwandvorlaufleitung 15. In jeder dieser drei Vorlaufleitungen 13, 14, 15 ist ein Vorlauftemperaturfühler 16 angeordnet. Alternativ ist es auch möglich, die Vorlauftemperatur aller Vorlaufleitungen über einen einzigen Vorlauftemperaturfühler in der Sammelvorlaufleitung 10 zu messen. Diese Verwendung eines einzigen Vorlauftemperaturfühlers stellt den Regelfall dar.

Die Vorlaufleitungen 13, 14, 15 sind Teile einer Raumbodentemperierrohrleitung 17, einer Raumdeckentemperierrohrleitung 18 und einer Raumwandtemperierrohrleitung 19. Die Führung dieser Temperierrohrleitungen 17. 18, 19 ist in der Fig. 1 schematisch wiedergegeben. Tatsächlich ist die Leitungsführung, wie dies vom Grundsatz her aus dem Stand der Technik bekannt ist, deutlich komplexer und in der Regel mäanderförmig. Zudem ist die Leitungsführung ausgehend vom Verteilerpunkt 12 so, dass die Vorlaufwege hin zum Raumboden 3, zur Raumdecke 4 und zur Raumwand 5 möglichst kurz sind.

Nach den Vorlauftemperaturfühlern 16 hat jede der drei Vorlaufleitungen 13, 14, 15 ein ansteuerbares Dosierventil 20, 21, 22 zur Beeinflussung der Raumtemperatur sowie der Flächentemperaturen des Raumbodens 3, der Raumdecke 4 und der Raumwand 5. In Rücklaufleitungen 23, 24, 25 der Temperierrohrleitungen 17, 18, 19 ist jeweils ein Rücklauftemperaturfühler 26, 27, 28 angeordnet. Über Einmündungspunkte 29 münden die Rücklaufleitungen 23, 24, 25 in eine Sammelrücklaufleitung 30 ein. Die Sammelrücklaufleitung 30 mündet wiederum in die Mischeinheit 9b ein.

Beim Betrieb des Temperierregelsystems 1 wird vermieden, dass vorgegebene Grenztemperaturen in bestimmten Raumabschnitten auftreten, so dass alle Abschnitte des Raums 2 eine Oberflächentemperatur in einem vorgegebenen, zulässigen Temperaturbereich aufweisen. Derartige Grenztemperaturen können technische Hintergründe haben.

So ist eine Grenztemperatur im Kühlbetrieb des Temperierregelsystems 1 vorgegeben durch den Taupunkt an den gekühlten Oberflächen des Raumbodens 3, der Raumdecke 4 und der Raumwand 5. Weitere Grenztemperaturvorgaben ergeben sich aus Behaglichkeitskriterien. So sollte beim Kühlen der Raumboden nicht zu kalt werden. Beim Heizen sollte die Raumdecke nicht zu heiß werden. Grundsätzlich kann für alle temperierten Raumflächen eine Maximalund eine Minimaltemperatur vorgegeben werden.

Zur Erfassung dieser Ist-Grenztemperaturen $T_{Fläche}$ sind im Raumboden 3 mehrere Grenztemperaturfühler untergebracht, von denen beispielhaft drei Grenztemperaturfühler 31 dargestellt sind. Die Raumbodengrenztemperaturfühler 31 sind in Abschnitten des Raumbodens 3 untergebracht, wo im Betrieb des Temperierregelsystems 1 die extremsten Temperaturen zu erwarten sind. Dies ist in der Regel im Bereich des vorlaufseitigen Abschnitts der Raumbodenvorlaufleitung 13 der Fall.

Entsprechend sind in der Raumdecke 3 Grenztemperaturfühler 32 und in der Raumwand 5 Grenztemperaturfühler 33 untergebracht.

Im Raum 2 ist zusätzlich noch ein bei Bedarf zuschaltbarer Raumentfeuchter 34 angeordnet. In der Regel ist jeweils ein Raumentfeuchter 34 einem Luftfeuchtigkeitsfühler des Multifunktionssensors 6 zugeordnet. Anstelle eines einzelnen Raumentfeuchters 34 können auch mehrere derartige Entfeuchter 34 vorgesehen sein.

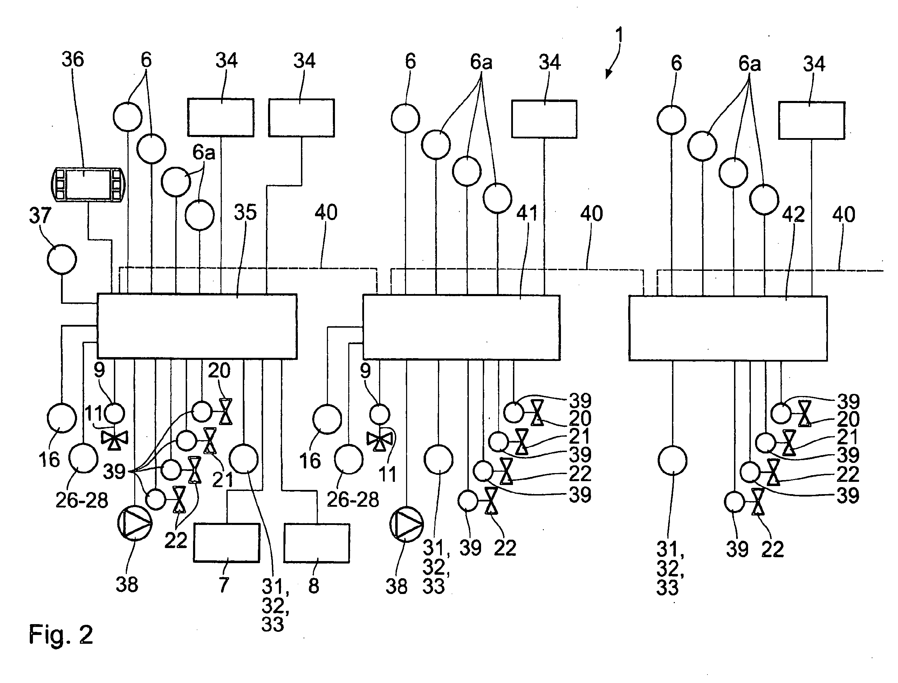

Fig. 2 zeigt die Regelkomponenten des Temperierregelsystems 1 sowie deren Signalanbindung an die in der Fig. 1 dargestellten Systemkomponenten.

Zur Temperierregelung des Raums 2 dient ein Masterregelmodul 35. Das Masterregelmodul 35 steht mit einer Bedieneinheit 36 in Signalverbindung. Weiterhin steht das Masterregelmodul 35 mit einem in der Fig. 1 nicht dargestellten Außentemperaturfühler 37 in Signalverbindung. Ferner steht das Masterregelmodul 35 mit den Vorlauftemperaturfühlern 16 und den Rücklauftemperaturfühlern 26, 27,28 in Signalverbindung. Ferner steht das Masterregelmodul 35 mit den Temperatur- und Feuchtefühlefeinheiten des Multifunktionssensors 6 oder weiterer Raumtemperaturfühler 6a und mit den Grenztemperaturfühlern 31, 32, 33 in Signalverbindung. Dargestellt sind in der Fig. 2 zwei dem Masterregelmodul 35 zugeordnete Multifunktionssensoren 6. Diese beiden Multifunktionssensoren 6 sind in verschiedenen Räumen angeordnet, die mit dem Masterregelmodul 35 angesteuert werden können.

Neben dem Raum 2 können also noch ein weiterer Raum oder es können noch weitere Räume vom Masterregelmodul 35 temperiert werden. Jedem dieser Räume ist einer der beiden Entfeuchter 34 zugeordnet, die mit dem Masterregelmodul 35 ebenfalls in Signalverbindung stehen. Weiterhin steht das Masterregelmodul 35 mit der Mischeinrichtung 9 in Signalverbindung. Das Masterregelmodul 35 kann insbesondere zur Temperierung mehrerer Räume, also nicht nur zur Temperierung des Raums 2 dienen. Bei den anderen Räumen kann ein Multifunktionssensor 6 mit integriertem Luftfeuchtigkeitsfühler vorgesehen sein, dies ist jedoch nicht zwingend. Das Masterregelmodul 35 nach Fig. 2 hat zwei Multifunktionssensoren 6 sowie zwei weitere Raumtemperaturfühler 6a ohne Luftfeuchtigkeitsfühler. Weiterhin steht das Masterregelmodul 35 mit einer in der Fig. 1 nicht dargestellten Förderpumpe 38 in der Sammel-vorlaufleitung 10 in Signalverbindung. Schließlich steht das Masterregelmodul 35 mit den Dosierventilen 20 bis 22 in Signalverbindung, die über ihnen zugeordnete Dosiersteuerantriebe 39 angesteuert werden. Dargestellt sind in der Fig. 2 vier derartige Dosierventile, nämlich ein Raumbodendosierventil 20, ein Raumdeckendosierventil 21 und zwei Raumwanddosierventile 22. Grundsätzlich ist auch eine andere Zuordnung der Dosierventile 20, 21, 22 möglich. Zum Beispiel können dem Raumboden 3, der Raumdecke 4 oder einer der Raumwände 5 auch andere Anzahlen von Dosierventilen 20, 21, 22 zugeordnet sein.

Über eine elektronische bzw. elektro-optische Busverbindung 40 steht das Masterregelmodul 35 mit einem ersten Slaveregelmodul 41 in Signal- und Datenverbindung. Letzteres steht entsprechend wie das Masterregelmodul 35 mit den im Zusammenhang mit dem Masterregelmodul 35 erwähnten externen Komponenten in Signalverbindung, so dass nachfolgend nur die Unterschiede in der Signalanbindung zwischen dem Masterregelmodul 35 und dem ersten Slaveregelmodul 41 erläutert werden. Das erste Slaveregelmodul 41 ist weiteren Räumen, einer weiteren Zone oder einem weiteren Bereich des Gebäudes zugeordnet. Anstelle zweier Entfeuchter steht in einem dieser weiteren Räume nur ein einziger Entfeuchter 34. Anstelle zweier Temperatur- und Luftfeuchtefühler hat in diesem weiteren Raum der dortige Multifunktionssensor 6 nur einen Temperatur- und Luftfeuchtefühler und es sind drei Raumtemperaturfühler 6a für weitere Räume vorgesehen. Auch die Verteilung der Grenztemperaturfühler 31, 32, 33 sowie deren Anzahlen können sich in den durch das erste Slaveregelmodul 41 geregelten weiteren Räumen von der Verteilung im Raum 2 unterscheiden. Eine eigene Signalverbindung mit der Warmwasserquelle 7 und der Kaltwasserquelle 8 ist beim ersten Slaveregelmodul 41 nicht erforderlich, da eine derartige Signalverbindung über das Masterregelmodul 35 und die Busverbindung 40 besteht.

Fig. 2 zeigt noch ein zweites Slaveregelmodul 42, welches über die Busverbindung 40 mit dem ersten Slaveregelmodul 41 in Signalverbindung steht. Die Anbindung des zweiten Slaveregelmoduls 42 an externe Komponenten in einem dritten Raum, einer dritten Zone oder einem dritten Bereich des Gebäudes, in dem die Temperatur geregelt werden soll, entspricht derjenigen des ersten Slaveregelmoduls 41. Das Temperierregelsystem 1 kann neben den beiden dargestellten Slaveregelmodulen 41, 42 noch weitere Slaveregelmodule zur Innentemperaturregelung weiterer Räume des Gebäudes aufweisen. Eine Erweiterung der Busverbindung 40, die vom zweiten Slaveregelmodul 42 zur Signalanbindung der weiteren Slaveregelmodule dient, ist in der Fig. 2 angedeutet.

Nachfolgend wird ein Kühlbetrieb des Temperierregelsystems 1 erläutert. Der Kühlbetrieb findet statt, wenn eine Ist-Raumtemperatur ohne Kühlung durch das Temperierregelsystem 1 oberhalb einer Soll-Raumtemperatur liegt. Im Kühlbetrieb werden zunächst mit Hilfe des Multifunktionssensors 6 die Ist-Innentemperatur und die Ist-Luftfeuchte im Raum 2 ermittelt. Diese Daten werden dem Masterregelmodul 35 zur Verfügung gestellt. Aus diesen beiden erfassten Ist-Werten berechnet das Masterregelmodul 35 eine Vorlaufminimaltemperatur $T_{Vorlauf, min}$, die von den den Temperierrohrleitungen 17, 18, 19 benachbarten Raumabschnitten zur Vermeidung einer Kondensatbildung, insbesondere an den Vorlaufleitungen 10, 13, 14 und 15, nicht unterschritten werden soll. Zudem sind im Masterregelmodul 35 noch weitere Minimaltemperaturen $T_{min}$ für temperierte Raumflächen anhand von Behaglichkeitskriterien elektronisch abgelegt. Diese Temperaturen $T_{min}$ können beispielsweise über die Bedieneinheit 36 eingegeben werden. Das Masterregelmodul 35 erhält zudem über den Außentemperaturfühler 37 die Außentemperatur in der Umgebung um das Gebäude.

Anhand einerseits der berechneten Vorlaufminimaltemperatur $T_{Vorlauf, min}$ und gegebenenfalls unter weitergehender Berücksichtigung der Behaglichkeitsminimaltemperaturen $T_{min}$ sowie der Außentemperatur gibt das Masterregelmodul 35 eine Soll-Vorlauftemperatur $T_{soll}$ für die Temperierrohrleitungen 17, 18, 19 vor. Die Mischeinrichtung 9 wird dann so angesteuert, dass die Ist -Temperatur des Temperierfluids der Soll-Vorlauftemperatur entspricht.

Im Masterregelmodul 35 ist weiterhin eine Soll-Raumtemperatur abgelegt, die ebenfalls über die Bedieneinheit 36 eingegeben werden kann. Das Masterregelmodul 35 steuert nun die Dosierventile 20, 21, 22 derart an, dass die Ist-Raumtemperatur der Soll-Raumtemperatur entspricht.

Im Kühlbetrieb erfolgt dabei die überwiegende Kühlleistung von der gekühlten Raumdecke 4 her. Die Vorlauftemperatur $T_{soll}$ in den Temperaturrohrleitungen 17 bis 19 kann beispielsweise 17°C sein. Bei dieser Temperatur findet bei der im Raum 2 gemessenen Luftfeuchte noch keine Kondensatbildung an den Vorlaufleitungen 10, 13, 14, 15 statt.

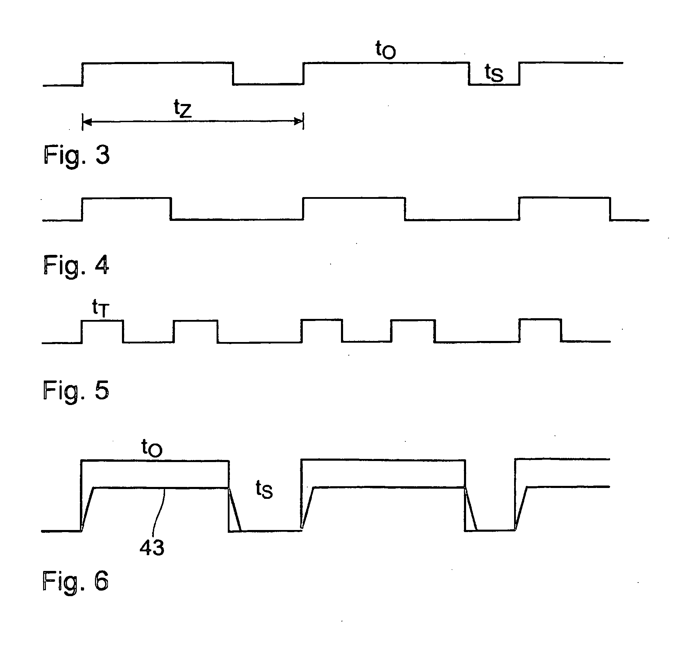

Die elektronische Ansteuerung der Dosierventile 20, 21, 22 über die Dosiersteuerantriebe 39 kann beispielsweise pulsweitenmoduliert erfolgen. Dies ist am Beispiel der Ansteuerung der Raumdeckendosierventile 21 in der Fig. 3 dargestellt. Dort ist das Ansteuersignal zur Öffnung des Raumdeckendosierventils 21 über die Zeit aufgetragen. Während einer Zykluszeit $t_z$ ist das Raumdeckendosierventil zunächst während einer Öffnungszeit $t_o$ geöffnet und

nachfolgend während einer Schließzeit $t_s$ geschlossen. Hierbei gilt: $t_z = t_o + t_s$. Dieser Zyklus wiederholt sich nun ständig. Wird eine höhere Kühlleistung über die Raumdecke 4 erforderlich, wird das Verhältnis $t_o / t_s$ bei gleichem $t_z$ erhöht. Soll weniger gekühlt werden, wird das Verhältnis $t_o / t_s$ entsprechend verringert.

Fig. 4 zeigt beim gleichen Kühlbetrieb die Ansteuerung des Raumbodendosierventils 20. Bei gleicher Zykluszeit $t_z$ ist dabei die Öffnungszeit $t_o$ geringer als bei der Ansteuerung des Raumdeckendosierventils 21 gemäß Fig. 3. Die Kühlleistung über den Raumboden 3 ist im Kühlbetrieb also geringer als über die Raumdecke 4. Hierdurch wird der Gefahr einer Unterkühlung des Raumbodens 3 vorgebeugt.

Im Masterregelmodul 35 ist weiterhin eine Eingriffstemperatur $T_{Eingriff}$ abgelegt, die oberhalb der für die jeweils temperierte Raumfläche vorgegebene Minimaltemperatur $T_{min}$ liegt. Bei mehreren, verschiedenen Raumabschnitten zugeordneten Behaglichkeitsminimaltemperaturen $T_{min}$ ist jeder dieser Minimaltemperaturen eine verglichen mit dieser höhere Eingriffstemperatur $T_{Eingriff}$ zugeordnet.

Im beschriebenen Beispiel liegt die Minimaltemperatur $T_{min}$ für den Raumboden 3 bei 20°C. Die Eingriffstemperatur $T_{Eingriff}$ liegt bei 21°C.

Über die Grenztemperaturfühler 31, 32, 33 werden nun die Ist-Grenztemperaturen $T_{Fläche}$ in den diesen Fühlern 31, 32, 33 benachbarten Raumabschnitten gemessen.

Sobald in einem der Raumabschnitte die zugeordnete Eingriffstemperatur $T_{Eingriff}$ durch die gemessene Ist-Grenztemperatur $T_{Flälhe}$ unterschritten wird, wird die Temperierung des entsprechenden Raumabschnitts so beeinflusst, dass sichergestellt ist, dass dieser Raumabschnitt die Minimaltemperatur $T_{min}$ nicht unterschreitet. Dies wird nachfolgend anhand einer Ausgangssituation mit den vorstehend schon angegebenen Temperaturen ($T_{Vorlauf, min}$= $T_{soll}$ = 17°C, $T_{Eingriff}$ = 21°C, $T_{min}$ = 20°C) näher erläutert. Dabei kann sich folgende Temperatursequenz ergeben:

| Raumbodengrenztemperatur | Soll-Vorlauftemperatur |
| --- | --- |
| 22,0°C | 17,0°C |
| 21,0°C | 17,0°C |
| 20,9°C | 17,4°C |
| 20,8°C | 17,8°C |
| 20,5°C | 19,0°C |
| 20,4°C | 19,4°C |
| 20,2°C | 20,2°C |
| 20,1°C | 20,6°C |
| 20,0°C | 21,0°C |

Bei Unterschreiten der Eingriffstemperatur $T_{Eingrif}$ für die gemessene Bodengrenztemperatur $T_{Fläche}$ wird also der ursprüngliche Soll-Wert $T_{soll}$ für die Vorlauftemperatur proportional zum Unterschreiten der Bodeneingriffstemperatur $T_{Eingriff}$ auf eine Korrektur-Soll-Vorlauftemperatur $T_{Vorlauf}$ angehoben.

Dies erfolgt nach der Formel

$$T_{Vorlauf} = T_{Eingriff} - k \times (T_{Fläche} - T_{min})$$

mit

$$k = (T_{Eingriff} - T_{soll}) / (T_{Eingriff} - T_{min})$$

$T_{soll}$ ist dabei der ursprüngliche Sollwert für die Vorlauftemperatur, im vorstehenden Beispiel also 17°C. $T_{Fläche}$ ist der vom Raumbodengrenztemperaturfühler 31 gemessene Temperatur-Ist-Wert.

Alternativ zu einem Anheben der Vorlauftemperatur kann die Temperierung des Raumabschnitts, bei dem die kritische Grenztemperatur auftritt, auch durch zumindest zeitweiliges Schließen des dem Temperierfluidmengenstrom durch diesen Raumabschnitt zugeordneten Dosierventils erfolgen. Wenn beispielsweise der Raumbodengrenztemperaturfühler 31 das Unterschreiten der Eingriffstemperatur meldet, schließt das Masterregelmodul 35 das Raumbodendosierventil 20, bis die Raumbodengrenztemperaturfühler 31 alle wieder eine Temperatur oberhalb der Eingriffstemperatur melden.

Anstelle eines vollständigen Schließens des Raumbodendosierventils 20 kann in diesem Fall auch ein zeitweiliges Schließen erfolgen durch Verringern des Verhältnisses $t_o$ / $t_z$.

Bei einer Ansteuerung beispielsweise des Raumbodendosierventils 20 mit Steuertakten mit fester Öffnungszeit $t_T$ kann eine Beeinflussung der Boden-Kühlleistung durch Unterbringen einer entsprechenden Anzahl von Steuertakten innerhalb eines Zyklus $t_z$ erfolgen. In der Fig. 5 ist die Situation dargestellt, in der pro Zyklus $t_z$ jeweils zwei Ansteuertakte $t_T$ untergebracht werden. Soll die Kühlleistung verringert werden, kann dies beispielsweise auf einen Steuertakt $t_T$ pro Zyklus $t_z$ verringert werden.

Eine Beeinflussung der Temperierung des Raumabschnitts, an dem die kritische Grenztemperatur unterhalb der Eingriffstemperatur gemessen wird, kann schließlich auch durch mechanisches Drosseln des diesen Raumabschnitts zugeordneten Dosierventils durch Verstellen eines stufenlos einstellbaren Ventilelements erfolgen. In der Fig. 6 ist eine mechanische Drosselung gezeigt, bei der auf den Dosiersteuerantrieb 39 ein Analogsignal 43 gegeben wird. Das Dosierventil, zum Beispiel das Raumbodendosierventil 20, wird zu Beginn der in der Fig. 6 dargestellten Sequenz von 0 % Fluiddurchlass auf etwa 60 % Fluiddurchlass geöffnet und bleibt dann während einer Zeitspanne $t_O$ offen, bis es wieder auf 0 % Durchlass geschlossen wird und dann während einer Zeit $t_S$ geschlossen ist. Zwischen den Stellwerten 0 % und 100 % Fluiddurchlass sind zu beliebigen Zeitpunkten beliebige stufenlose Zwischenwerte möglich, was in der Fig. 6 nicht dargestellt ist.

Die Kühlleistungen im Raumboden 3, die durch die Ansteuerungen nach den Fig. 4, 5 und 6 erzielt werden, sind in etwa gleich groß.

Ein Absenken der Minimaltemperatur $T_{vortauf, min}$ kann im Bedarfsfall durch Zuschalten des oder der Raumentfeuchter 34 geschehen. Hierdurch wird die Luftfeuchtigkeit abgesenkt, was wiederum den Taupunkt und somit die Minimaltemperatur $T_{vorlauf, min}$ für den Vorlauf herabsetzt.

Nachfolgend wird der Heizbetrieb des Temperierregelsystems 1 dort beschrieben, wo er nicht entsprechend dem Kühlbetrieb abläuft. Der Heizbetrieb findet statt, wenn eine Ist-Raumtemperatur ohne Heizung durch das Temperierregelsystem 1 unterhalb einer Soll-Raumtemperatur liegt. Im Heizbetrieb wird eine Maximaltemperatur $T_{max}$ vorgegeben, die von den Temperierrohrleitungen 17, 18, 19 benachbarten Raumabschnitten nicht überschritten werden soll. Die Maximaltemperatur $T_{max}$ kann material- oder behaglichkeitsbedingt sein. Anhand der vorgegebenen Maximaltemperatur $T_{max}$ wird dann die Soll-Vorlauftemperatur $T_{soll}$ für die Temperierrohrleitungen 17, 18, 19 vorgegeben. Die Dosierventile 20, 21, 22 werden dann so angesteuert, dass die Ist-Raumtemperatur einer vorgegebenen Soll-Raumtemperatur entspricht. Im Heizbetrieb wird die überwiegende Heizleistung von der Raumbodentemperierrohrleitung 17 erbracht.

Für den Heizbetrieb wird eine unterhalb der Maximaltemperatur $T_{max}$ liegende Eingriffstemperatur $T_{Eingriff, max}$ vorgegeben. Diese Eingriffstemperatur kann bei verschiedenen Raumabschnitten unterschiedlich vorgegeben werden. Mit den Grenztemperaturfühlern 31, 32, 33 wird das Einhalten der Eingriffstemperatur überwacht. Es werden dort also verschiedene Ist-Grenztemperaturen $T_{Fläche}$ gemessen. Sobald in einem Raumabschnitt die Eingriffstemperatur überschritten wird, wird die Temperierung des kritischen Raumabschnitts so beeinflusst, dass dieser die Maximaltemperatur nicht überschreitet. Dies erfolgt entweder durch ein Absenken der Vorlauftemperatur oder durch ein zumindest zeitweiliges Drosseln oder Abschalten des dem kritischen Raumabschnitt zugeordneten Dosierventils entsprechend dem, was oben im Kühlbetrieb erläutert wurde.

**Patentansprüche**

1. Temperierregelsystem (1) zur Regelung der Innentemperatur mindestens eines Raumes (2) eines Gebäudes

- mit mindestens einem im Raum (2) angeordneten Raumtemperaturfühler (6) zur Erfassung einer Ist-Raumtemperatur,
- mit mindestens einem im Bereich eines im Betrieb des Temperierregelsystems (1) extrem temperierten Grenztemperaturraumabschnittes angeordneten Grenztemperaturfühler (31, 32, 33) zur Erfassung einer Ist-Grenztemperatur ($T_{Fläche}$) in dem Raum (2),
- mit mindestens einem Luftfeuchtigkeitsfühler (6) zur Erfassung einer Ist-Luftfeuchtigkeit in dem Raum (2),
- mit mindestens zwei von einem Temperierfluid durchströmten Temperierrohrleitungen (17, 18, 19), von denen eine Rohrleitung (17) in einem Raumboden (3) des Raumes (2) und eine Rohrleitung (18) in einer Raumdecke (4) des Raumes (2) untergebracht ist,
- mit einer Heißfluidquelle (7) und einer Kaltfluidquelle (8), die über genau eine Mischeinrichtung (9) zur Vorgabe einer gemeinsamen Soll-Vorlauftemperatur ($T_{vorlauf}$) des Temperierfluids mit den Temperierrohrleitungen (17, 18, 19) in Verbindung stehen,

- mit jeweils einem jeweils einer der Temperierrohrleitungen (17, 18, 19) zugeordneten Dosierventil (20, 21, 22) zur Vorgabe eines Temperierfluidmengenstroms in der zugeordneten Temperierrohrleitung (17, 18, 19),
- mit mindestens einem Regelmodul (35, 41, 42), welches mit den Temperaturfühlern (6, 31, 32, 33), dem Luftfeuchtigkeitsfühler (6), der Mischeinrichtung (9) und den Dosierventilen (20, 21, 22) in Signalverbindung steht.

2. Temperierregelsystem nach Anspruch 1 mit mindestens einer weiteren vom Temperierfluid durchströmten Temperierrohrleitung (19), die in mindestens einer Raumwand (5) des Raums (2) untergebracht ist.

3. Temperierregelsystem nach Anspruch 1 oder 2, **gekennzeichnet durch** einen angesteuert in Abhängigkeit vom Taupunkt im Raum (2) zuschaltbaren Raumentfeuchter (34).

4. Temperierregelsystem nach einem der Ansprüche 1 bis 3, **gekennzeichnet durch** mindestens einen Vorlauftemperaturfühler (16) zur Erfassung einer Ist-Vorlauftemperatur in den Temperierrohrleitungen (17, 18, 19) und insbesondere **durch** jeweils einen Rücklauftemperaturfühler (26, 27, 28) zur Erfassung einer Ist-Rücklauftemperatur in den Temperierrohrleitungen (17, 18, 19).

5. Temperierregelsystem nach einem der Ansprüche 1 bis 4, **dadurch gekennzeichnet, dass** das Regelmodul ein Mastermodul (35) und mehrere, weiteren Räumen, Zonen oder Bereichen zugeordnete Slavemodule (41, 42) umfasst, wobei die Module (35, 41, 42) über eine Datenbusverbindung (40) miteinander in Signalverbindung stehen.

6. Verfahren zum Betrieb eines Temperierregelsystems nach einem der Ansprüche 1 bis 5 mit folgenden Verfahrensschritten im Kühlbetrieb:

   - Erfassen der Ist-Innentemperatur und der Ist-Luftfeuchte des Raums (2),
   - Berechnen einer Minimaltemperatur ($T_{vorlauf, min}$) aus den erfassten Ist-Werten, die von Raumabschnitten, die den Temperierrohrleitungen (17, 18, 19) benachbart sind, zur Vermeidung einer Kondensatbildung nicht unterschritten werden soll,
   - Vorgeben einer Soll-Vorlauftemperatur ($T_{soll}$) für die Temperierrohrleitungen (17, 18, 19) anhand der berechneten Vorlauf-Minimaltemperatur ($T_{Vorlauf, min}$),
   - Ansteuern der Mischeinrichtung (9) derart, dass die Ist-Vorlauftemperatur der Soll-Vorlauftemperatur ($T_{soll}$) entspricht,
   - Vorgeben einer Soll-Raumtemperatur,
   - Ansteuern der Dosierventile (20, 21, 22) derart, dass die Ist-Raumtemperatur der Soll-Raumtemperatur entspricht,
   - Vorgeben einer Flächenminimaltemperatur ($T_{min}$) für mindestens eine Fläche eines Grenztemperaturraumabschnitts,
   - Vorgeben einer oberhalb der Flächenminimaltemperatur ($T_{min}$) liegenden Eingriffstemperatur ($T_{Eingriff}$),
   - Messen der Ist-Grenztemperatur ($T_{Fläche}$) der Fläche,
   - bei Unterschreiten der Eingriffstemperatur ($T_{Eingriff}$) durch die Ist-Grenztemperatur ($T_{Fläche}$) erfolgt die Beeinflussen der Temperierung des Grenztemperaturraumabschnitts derart, dass der Grenztemperaturraumabschnitt die Flächenminimaltemperatur ($T_{min}$) nicht unterschreitet.

7. Verfahren nach Anspruch 6, **dadurch gekennzeichnet, dass** das Beeinflussen erfolgt durch Anheben der Soll-Vorlauftemperatur ($T_{soll}$) auf eine Korrektor-Soll-Vorlauftemperatur ($T_{vorlauf}$)

8. Verfahren nach Anspruch 7, **dadurch gekennzeichnet, dass** das Anheben auf die Korrektur-Soll-Vorlauftemperatur ($T_{Vorlauf}$) gemäß dem folgenden Zusammenhang erfolgt:

$$T_{Vorlauf} = T_{Eingriff} - k \times (T_{Fläche} - T_{min})$$

mit

$$k = (T_{Eingriff} - T_{soll}) / (T_{Eingriff} - T_{min}).$$

**9.** Verfahren nach einem der Ansprüche 6 bis 8, **dadurch gekennzeichnet, dass** das Beeinflussen erfolgt durch mindestens zeitweiliges ($t_S$) Schließen des dem Temperierfluidmengenstrom durch den Grenztemperaturraumabschnitt zugeordneten Dosierventils (20, 21, 22).

**10.** Verfahren nach Anspruch 9, **dadurch gekennzeichnet, dass** das zeitweilige Schließen erfolgt durch Verringern der Öffnungszeiten ($t_O$) bei einer gepulsten Betätigung des Dosierventils (20, 21, 22).

**11.** Verfahren nach einem der Ansprüche 6 bis 10, **dadurch gekennzeichnet, dass** das zeitweilige Schließen erfolgt durch Verlängern der Schließzeiten ($t_S$) bei einer gepulsten Betätigung des Dosierventils (20, 21, 22).

**12.** Verfahren nach einem der Ansprüche 6 bis 11, **dadurch gekennzeichnet, dass** das zeitweilige Schließen erfolgt durch Vorgeben der Anzahl der Öffnungstakte ($t_T$) innerhalb eines Betätigungszyklus ($t_Z$) bei einer getakteten Betätigung des Dosierventils (20, 21, 22).

**13.** Verfahren nach einem der Ansprüche 6 bis 12, **dadurch gekennzeichnet, dass** das Beeinflussen erfolgt durch mechanisches Drosseln des dem Temperierfluidmengenstroms durch den Grenztemperaturraumabschnitt zugeordneten Dosierventils (20, 21, 22) durch Verstellen (39) eines stufenlos einstellbaren Ventilelements des Dosierventils (20, 21, 22).

**14.** Verfahren nach einem der Ansprüche 6 bis 13, **dadurch gekennzeichnet, dass** die Vorlaufminimaltemperatur ($T_{Vorlauf, min}$) durch Entfeuchten des Raumes (2) gesenkt wird.

**15.** Verfahren zum Betrieb eines Temperierregal systems nach einem der Ansprüche 1 bis 5 mit folgenden Verfahrensschritten im Heizbetrieb:

- Erfassen der Ist-Innentemperatur,
- Vorgeben einer Maximaltemperatur ($T_{max}$), die von Raumabschnitten, die den Temperierrohrleitungen (17, 18, 19) benachbart sind, nicht überschritten werden soll,
- Vorgeben einer Soll-Vorlauftemperatur ($T_{soll}$) für die Temperierrohrleitungen (17, 18, 19) anhand der vorgegebenen Maximaltemperatur ($T_{max}$),
- Ansteuern der Mischeinrichtung (9) derart, dass die Ist-Vorlauftemperatur der Soll-Vorlauftemperatur ($T_{soll}$) entspricht,
- Vorgeben einer Soll-Raumtemperatur,
- Ansteuern des Dosierventils (20, 21, 22) derart, dass die Ist-Raumtemperatur der Soll-Raumtemperatur entspricht,
- Vorgeben einer unterhalb der Maximaltemperatur ($T_{max}$) liegenden Eingriffstemperatur ($T_{Eingriff, max}$),
- Messen der Ist-Grenztemperatur ($T_{Fläche}$),
- bei Überschreiten der Eingriffstemperatur ($T_{Eingriff, max}$) durch die Ist-Grenztemperatur ($T_{Fläche}$) erfolgt die Beeinflussen der Temperierung des Grenztemperaturraumabschnitts derart, dass der Grenztemperaturraumabschnitt die Maximaltemperatur ($T_{max}$) nicht überschreitet.

**Claims**

**1.** Temperature regulating system (1) for regulating the inside temperature of at least one room (2) of a building,

- with at least one room-temperature sensor (6), arranged in the room (2), for detecting an actual room temperature,
- with at least one limit-temperature sensor (31, 32 33), arranged in the region of a limit-temperature room portion subjected to extreme temperature during the operation of the temperature regulating system (1), for detecting an actual limit temperature ($T_{Fläche}$) in the room (2),
- with at least one air-humidity sensor (6) for detecting an actual air humidity in the room (2),
- with at least two temperature control pipelines (17, 18, 19) through which a temperature control fluid flows, of which one pipeline (17) is accommodated in a room floor (3) of the room (2) and one pipeline (18) is accommodated in a room ceiling (4) of the room (2),
- with a hot-fluid source (7) and a cold-fluid source (8) which are connected to the temperature control pipelines (17, 18, 19) via exactly one mixing device (9) for stipulating a joint desired-forward-flow temperature ($T_{vorlauf}$) of the temperature control fluid,

- with in each case one metering valve (20, 21, 22), assigned in each case to one of the temperature control pipelines (17, 18, 19), for stipulating a temperature control fluid quantity flow in the assigned temperature control pipeline (17, 18, 19),
- with at least one regulating module (35, 41, 42) which is signal-connected to the temperature sensors (6, 31, 32, 33) to the air-humidity sensor (6), to the mixing device (9) and to the metering valves (20, 21, 22).

2. Temperature regulating system according to Claim 1, with at least one further temperature control pipeline (19) through which the temperature control fluid flows and which is accommodated in at least one room wall (5) of the room (2).

3. Temperature regulating system according to Claim 1 or 2, **characterized by** a room dehumidifier (34) capable of being switched on by being activated as a function of the dew point in the room (2).

4. Temperature regulating system according to one of Claims 1 to 3, **characterized by** at least one forward-flow temperature sensor (16) for detecting an actual forward-flow temperature in the temperature control pipelines (17, 18, 19) and, in particular, in each case by a return-flow temperature sensor (26, 27, 28) for detecting an actual return-flow temperature in the temperature control pipelines (17, 18, 19).

5. Temperature regulating system according to one of Claims 1 to 4, **characterized in that** the regulating module comprises a master module (35) and a plurality of slave modules (41, 42) assigned to further rooms, zones or regions, the modules (35, 41, 42) being signal-connected to one another via a data bus connection (40).

6. Method for operating a temperature regulating system according to one of Claims 1 to 5, with the following method steps in cooling operation:

  - detection of the actual inside temperature and of the actual air humidity of the room (2),
  - calculation of a minimum temperature ($T_{Vorlauf, min}$) from the detected actual values, which is not to be undershot by room portions adjacent to the temperature control pipelines (17, 18, 19), in order to avoid the formation of condensate,
  - stipulation of a desired forward-flow temperature ($T_{soll}$) for the temperature control pipelines (17, 18, 19) on the basis of the calculated forward-flow minimum temperature ($T_{Vorlauf, min}$),
  - activation of the mixing device (9) in such a way that the actual forward-flow temperature corresponds to the desired forward-flow temperature ($T_{soll}$),
  - stipulation of a desired room temperature,
  - activation of the metering valves (20, 21, 22) in such a way that the actual room temperature corresponds to the desired room temperature,
  - stipulation of an area minimum temperature ($T_{min}$) for at least one area of a limit-temperature room portion,
  - stipulation of an action temperature ($T_{Eingriff}$) lying above the area minimum temperature ($T_{min}$),
  - measurement of the actual limit temperature ($T_{Fläche}$) of the area,
  - if the actual limit temperature ($T_{Fläche}$) undershoots the action temperature ($T_{Eingriff}$), the temperature regulation of the limit-temperature room portion is influenced in such a way that the limit-temperature room portion does not undershoot the area minimum temperature ($T_{min}$).

7. Method according to Claim 6, **characterized in that** influence is carried out by raising the desired forward-flow temperature ($T_{soll}$) to a correcting desired forward-flow temperature ($T_{Vorlauf}$).

8. Method according to Claim 7, **characterized in that** raising to the correcting desired forward-flow temperature ($T_{Vorlauf}$) takes place according to the following relationship:

$$T_{Vorlauf} = T_{Eingriff} - k \times (T_{Fläche} - T_{min}),$$

with

$$k = (T_{Eingriff} - T_{soll})/(T_{Eingriff} - T_{min}).$$

9. Method according to one of Claims 6 to 8, **characterized in that** influence is carried out by the at least temporary ($t_s$) closing of the metering valve (20, 21, 22) assigned to the temperature control fluid quantity flow through the limit-temperature room portion.

10. Method according to Claim 9, **characterized in that** temporary closing is carried out by reducing the opening times ($t_o$) during pulsed actuation of the metering valve (20, 21, 22).

11. Method according to one of Claims 6 to 10, **characterized in that** temporary closing is carried out by lengthening the closing times (ts) during pulsed actuation of the metering valve (20, 21, 22).

12. Method according to one of Claims 6 to 11, **characterized in that** temporary closing is carried out by stipulating the number of opening strokes ($t_T$) within an actuation cycle ($t_Z$) during clocked actuation of the metering valve (20, 21, 22).

13. Method according to one of Claims 6 to 12, **characterized in that** influence is carried out by mechanically throttling the metering valve (20, 21, 22) assigned to the temperature control fluid quantity flow through the limit-temperature room portion, by the adjustment (39) of the continuously adjustable valve element of the metering valve (20, 21, 22).

14. Method according to one of Claims 6 to 13, **characterized in that** the forward-flow minimum temperature ($T_{vorlauf, min}$) is lowered by the dehumidification of the room (2).

15. Method for operating a temperature regulating system according to one of Claims 1 to 5, with the following method steps in heating operation:

    - detection of the actual inside temperature,
    - stipulation of a maximum temperature ($T_{max}$) which is not to be overshot by room portions adjacent to the temperature control pipelines (17, 18, 19),
    - stipulation of a desired forward-flow temperature ($T_{sol}$l) for the temperature control pipelines (17, 18 19) on the basis of the stipulated maximum temperature ($T_{max}$),
    - activation of the mixing device (9) in such a way that the actual forward-flow temperature corresponds to the desired forward-flow temperature ($T_{soll}$),
    - stipulation of a desired room temperature,
    - activation of the metering valve (20, 21, 22) in such a way that the actual room temperature corresponds to the desired room temperature,
    - stipulation of an action temperature ($T_{Eingriff, max}$) lying below the maximum temperature ($T_{max}$),
    - measurement of the actual limit temperature ($T_{Fläche}$),
    - if the actual limit temperature ($T_{Fläche}$) overshoots the action temperature ($T_{Eingrift, max}$), the temperature regulation of the limit-temperature room portion is influenced in such a way that the limit-temperature room portion does not overshoot the maximum temperature ($T_{max}$)

**Revendications**

1. Système (1) de régulation de climatisation destiné à réguler la température intérieure d'au moins un local (2) d'un bâtiment et présentant :

    - au moins une sonde (6) de température du local disposée dans un local (2) pour détecter la température effective du local,
    - au moins une sonde (31, 32, 33) de température limite disposée dans la région d'une partie du local à température limite qui présente une température extrême lorsque le système (1) de régulation de climatisation fonctionne, pour détecter une température limite effective ($T_{Fläche}$) dans le local (2),
    - au moins une sonde (6) d'humidité de l'air qui détecte une humidité effective de l'air présent dans le local (2),
    - au moins deux conduits tubulaires (17, 18, 19) de climatisation traversés par un fluide de climatisation, parmi lesquels un conduit tubulaire (17) est installé dans un plancher (3) du local (2) et un conduit tubulaire (18) dans un plafond (4) du local (2),
    - une source (7) de fluide de chauffage et une source (8) de fluide de refroidissement qui communiquent avec les conduits tubulaires (17, 18, 19) de climatisation par un unique dispositif de mélange (9) en vue de définir une température commune de départ de consigne ($T_{Vorlauf}$) du fluide de climatisation,

- une vanne doseuse (20, 21, 22) associée respectivement à chacun des conduits tubulaires (17, 18, 19) de climatisation et qui définit un débit de fluide de climatisation dans le conduit tubulaire (17, 18, 19) de climatisation qui lui est associé,
- au moins un module de régulation (35, 41, 42) qui est relié en signalisation avec les sondes de température (6, 31, 32, 33), la sonde (6) d'humidité de l'air, le dispositif de mélange (9) et les soupapes doseuses (20, 21, 22).

2. Système de régulation de climatisation selon la revendication 1, présentant au moins un autre conduit tubulaire (19) de climatisation traversé par un fluide de climatisation et installé dans au moins une paroi (5) du local (2).

3. Système de régulation de climatisation selon la revendication 1 ou 2, **caractérisé par** un déshumidificateur (34) de local qui peut être raccordé et commandé en fonction du point de rosée dans le local (2).

4. Système de régulation de climatisation selon l'une des revendications 1 à 3, **caractérisé par** au moins une sonde (16) de température de départ qui détecte une température de départ effective dans les conduits tubulaires (17, 18, 19) de climatisation et en particulier par une sonde (26, 27, 28) de température de retour qui détecte une température de retour effective dans chacun des conduits tubulaires (17, 18, 19) de climatisation.

5. Système de régulation de climatisation selon l'une des revendications 1 à 4, **caractérisé en ce que** le module de régulation comporte un module maître (35) et plusieurs modules esclaves (41, 42) associés à d'autres locaux, d'autres zones ou parties, les modules (35, 41, 42) étant reliés entre eux en signalisation par une liaison (40) par bus de données.

6. Procédé de gestion d'un système de régulation de climatisation selon l'une des revendications 1 à 5, qui présente les étapes de procédé suivantes lorsqu'il fonctionne en refroidissement :

   - détection de la température intérieure effective et de l'humidité effective de l'air dans le local (2),

   - à partir des valeurs effectives détectées, calcul d'une température minimale ($T_{Vorlauf, min}$) en dessous de laquelle on ne peut descendre dans des parties du local qui sont voisines des conduits tubulaires (17, 18, 19) de climatisation, pour éviter la formation de condensats,
   - à l'aide de la température minimale de départ calculée ($T_{Vorlauf, min}$), définition d'une température de départ de consigne ($T_{soll}$) pour les conduits tubulaires (17, 18, 19) de climatisation,
   - commande du dispositif de mélange (9) de telle sorte que la température effective de départ corresponde à la température de départ de consigne ($T_{soll}$),
   - définition d'une température de consigne du local,
   - commande de la vanne doseuse (20, 21, 22) de telle sorte que la température effective du local corresponde à la température de consigne du local,
   - définition d'une température minimale de surface ($T_{min}$) pour au moins une surface d'une partie de local à température limite,
   - définition d'une température d'intervention ($T_{Eingriff}$) située au-dessus de la température minimale de surface ($T_{min}$),
   - mesure de la température limite effective ($T_{Fläche}$) de la surface et
   - lorsque la température d'intervention ($T_{Eingriff}$) n'est pas atteinte par la température limite effective ($T_{Fläche}$), l'intervention sur la climatisation de la partie du local à température limite a lieu de telle sorte que la partie du local à température limite ne soit pas inférieure à la température minimale de surface ($T_{min}$),

7. Procédé selon la revendication 6, **caractérisé en ce que** l'intervention s'effectue en relevant la température de départ de consigne ($T_{soll}$) jusqu'à une température de départ de consigne de correction ($T_{Vorlauf}$)

8. Procédé selon la revendication 7, **caractérisé en ce que** le relèvement à la température de départ de consigne de correction ($T_{vorlauf}$) s'effectue selon la relation suivante :

$$T_{Vorlauf} = T_{Eingriff} - k \times (T_{Fläche} - T_{min})$$

avec

$$k = (T_{Eingriff} - T_{soll})/ (T_{Eingriff} - T_{min}).$$

**9.** Procédé selon l'une des revendications 6 à 8, **caractérisé en ce que** l'intervention s'effectue par fermeture au moins temporaire ($t_s$) de la vanne doseuse (20, 21, 22) associée au débit de fluide de climatisation dans la partie du local à température limite.

**10.** Procédé selon la revendication 9, **caractérisé en ce que** la fermeture temporaire s'effectue par diminution des durées d'ouverture ($t_O$) lorsque la vanne doseuse (20, 21, 22) est actionnée de manière pulsée.

**11.** Procédé selon l'une des revendications 6 à 10, **caractérisé en ce que** la fermeture temporaire s'effectue par prolongation des durées de fermeture ($t_S$) lorsque la vanne doseuse (20, 21, 22) est actionnée de manière pulsée.

**12.** Procédé selon l'une des revendications 6 à 11, **caractérisé en ce que** la fermeture temporaire s'effectue en imposant le nombre des passes d'ouverture ($t_T$) dans un cycle d'actionnement ($t_z$) lorsque la vanne doseuse (20, 21, 22) est actionnée de manière cadencée.

**13.** Procédé selon l'une des revendications 6 à 12, **caractérisé en ce que** l'intervention s'effectue par étranglement mécanique de la vanne doseuse (20, 21, 22) associée au débit de fluide de climatisation par l'intermédiaire de la partie du local à température limite, par ajustement (39) d'un élément de vanne ajustable progressivement de la vanne doseuse (20, 21, 22).

**14.** Procédé selon l'une des revendications 6 à 13, **caractérisé en ce que** la température minimale de départ ($T_{Vorlauf, min}$) est abaissée en déshumidifiant le local (2).

**15.** Procédé de gestion d'un système de régulation de climatisation selon l'une des revendications 1 à 5, qui présente les étapes de procédé suivantes lorsqu'il fonctionne en chauffage :

- détection de la température intérieure effective,
- définition d'une température maximale ($T_{max}$) qui ne peut être dépassée dans des parties du local voisines des conduits tubulaires (17, 18, 19) de climatisation,
- à l'aide de la température maximale ($T_{max}$) définie, définition d'une température de départ de consigne ($T_{soll}$ des conduits tubulaires (17, 18, 19) de climatisation,
- commande du dispositif de mélange (9) de telle sorte que la température de départ effective corresponde à la température de départ de consigne ($T_{soll}$),
- définition d'une température de consigne du local,
- commande de la vanne doseuse (20, 21, 22) de telle sorte que la température effective du local corresponde à la température de consigne du local,
- définition d'une température d'intervention ($T_{Eingriff, max}$) située en dessous de la température maximale ($T_{max}$) ,
- mesure de la température limite effective ($T_{Fläche}$),
- si la température d'intervention ($T_{Eingriff, max}$) est dépassée par la température limite effective ($T_{Fläche}$), l'intervention sur la climatisation de la partie du local à température limite s'effectue de telle sorte que la partie du local à température limite ne dépasse pas la température maximale ($T_{max}$)

Fig. 1

EP 2 095 028 B1

Fig. 2

$t_O$

$t_S$

$t_Z$

Fig. 3

Fig. 4

$t_T$

Fig. 5

$t_O$

$t_S$

43

Fig. 6

**IN DER BESCHREIBUNG AUFGEFÜHRTE DOKUMENTE**

**In der Beschreibung aufgeführte Patentdokumente**

- DE 20004881
- DE 10060797 C1
- DE 19916457 C1
- IT 1247632